# FASCICULE DE BREVET EUROPEEN

(11) **EP 2 227 908 B1**
(45) Date de publication et mention de la délivrance du brevet: **11.02.2015**
(21) Numéro de dépôt: 08870378.0
(22) Date de dépôt: 19.12.2008
(51) Int. Cl.: H04N 19/156, H04N 19/103, H04N 19/523, H04N 19/132, H04N 19/18, H04N 19/117, H04N 19/61, H04N 19/46

(54) **PROCEDE DE DECODAGE A COMPLEXITE VARIABLE D'UN SIGNAL D'IMAGES, TERMINAL DE DECODAGE, PROCEDE DE CODAGE, DISPOSITIF DE CODAGE, SIGNAL ET PROGRAMMES D'ORDINATEUR CORRESPONDANTS**
VERFAHREN ZUR BILDSIGNALDEKODIERUNG MIT UNTERSCHIEDLICHER KOMPLEXITÄT UND ENTSPRECHENDES DEKODIERENDGERÄT, KODIERVERFAHREN, KODIERVORRICHTUNG, SIGNAL UND COMPUTERSOFTWAREPRODUKTE
METHOD FOR THE VARIABLE-COMPLEXITY DECODING OF AN IMAGE SIGNAL, AND CORRESPONDING DECODING TERMINAL, ENCODING METHOD, ENCODING DEVICE, SIGNAL AND COMPUTER SOFTWARE PRODUCTS

(30) Priorité: 21.12.2007 FR 0760304
(43) Date de publication de la demande: 15.09.2010
(73) Titulaire: Orange, 75015 Paris (FR)
(72) Inventeur: AMONOU, Isabelle, F-35235 Thorigne Fouillard (FR); CAMMAS, Nathalie, F-35490 Sens de Bretagne (FR); KERVADEC, Sylvain, F-35490 Sens de Bretagne (FR); PATEUX, Stéphane, F-35700 Rennes (FR)
(74) Mandataire: Bioret, Ludovic
(86) Numéro de dépôt international: PCT/FR2008/052393
(87) Numéro de publication internationale: WO 2009/087331

(56) Documents cités:
- WO-A-02/51160
- WO-A-02/080571

## Description

### 1. domaine de l'invention

Le domaine de l'invention est celui du codage, et du décodage de signaux numériques, et en particulier de signaux vidéo, ou de signaux de transport d'images.

Plus précisément, l'invention concerne le codage et le décodage échelonnables, ou « scalables », permettant aux décodeurs d'adapter le décodage d'un signal reçu à leur capacité de traitement, ou aux exigences requises par un utilisateur.

### 2. solutions de l'art antérieur

Le principe de la « scalabilité » (ou échelonnabilité), visant à fournir différents niveaux de reconstruction à partir d'un flux (« bitstream » en anglais) unique reçu par un décodeur, est déjà connu et notamment décrit dans les documents WO 02/080571 et WO 02/51160. Par exemple, il permet de proposer différents niveaux de reconstruction d'une vidéo, à partir du flux reçu. Ces niveaux de reconstruction dépendent notamment de la complexité des opérations du décodage à mettre en oeuvre.

C'est par exemple le cas selon la norme H.264 actuelle, qui propose une scalabilité basée sur une approche hiérarchique avec une prédiction inter-couches qui permet de limiter la redondance entre les couches (voir par exemple le document « SVC- Amendement 3» de la norme H.264/MPEG-4 AVC). Les mêmes informations sont représentées à des niveaux hiérarchiques différents avec une progression en qualité et/ou en résolution.

Le codeur SVC propose une scalabilité dans le sens où chaque décodeur peut choisir la quantité de données qu'il va traiter, en fonction des niveaux hiérarchiques qu'il retient. Le nombre d'informations à décoder peut ainsi être réduit, en contrepartie bien sûr d'une dégradation de la qualité des images restituées.

Afin de limiter la complexité de décodage d'un flux conforme à un standard vidéo (par exemple H.264), certaines applications particulières prévoient de redéfinir certaines opérations du décodage à partir d'outils moins complexes. Cependant, cette redéfinition des outils utilisés au décodage doit être prise en compte dans le processus de codage du flux afin d'éviter au décodeur de partir en dérive. La dérive est la désynchronisation des images décodées qui servent d'images référence pour la prédiction temporelle entre le codeur et le décodeur. Si ces images ne sont pas identiques au codeur et au décodeur, le décodeur reconstruit des images avec des erreurs qui se cumulent au fur et à mesure du temps.

### 3. résumé de l'invention

La solution proposée par l'invention ne présente pas ces inconvénients de l'art antérieur. Elle concerne en effet notamment un procédé de décodage d'un signal d'images numérique dans un terminal de décodage, mettant en oeuvre un décodage à complexité variable, permettant, pour au moins une étape du décodage, une sélection d'au moins un outil de décodage, parmi au moins deux outils de décodage disponibles.

Un tel procédé de décodage comprend, selon l'invention, les étapes suivantes :
- identification, parmi lesdites images, de premières images, dites images de contrôle, et de secondes images, dites images intermédiaires ;
- application, à chacune desdites images de contrôle, pour au moins une étape du décodage, d'au moins un outil de décodage prédéterminé, imposé par ledit signal ;
- application, à au moins une desdites images intermédiaires, pour au moins une étape du décodage, d'au moins un outil de décodage sélectionné par ledit terminal de décodage,, et non imposé par ledit signal.

Ainsi, on propose une scalabilité en complexité au décodage, jouant sur la qualité de la séquence reconstruite. Différents décodeurs peuvent mettre en oeuvre des décodages différents, en fonction de leurs ressources notamment, sur les images intermédiaires (ou seulement sur certaines d'entre elles), sans contrainte sur le codage de celles-ci.

En d'autres termes, pour les images intermédiaires, le ou les outils de décodage utilisés pour une étape du décodage peuvent amener à un résultat différent de celui obtenu par un outil de décodage imposé pour une image de contrôle pour ladite étape du processus de décodage.

Les risques de dérive sont limités à l'aide des images de contrôle, pour lesquelles tous les décodeurs utilisent les mêmes outils de décodage, à savoir ceux pris en compte par le codage.

L'identification des images de contrôle peut se faire de façon explicite (information présente dans le signal d'images) ou implicite (chaque décodeur sait, a priori, identifier ces images dans le flux qu'il reçoit).

L'invention peut s'appliquer à de nombreux types de signaux, ou flux, notamment vidéo, reçus dans des terminaux divers, tels que des radiotéléphones, des décodeurs de télévision (« set-top-box » par exemple), des terminaux multimédia ou des terminaux d'ordinateur.

Dans le cas où ledit signal comprend d'une part des informations non dégradables (par exemple des images « I » ou des images d'un niveau hiérarchique donné) et d'autre part des informations dégradables (par exemple des images « P » ou « B » ou des images d'un niveau hiérarchique supérieur), à partir d'au moins une information, ladite étape d'identification considère qu'au moins lesdites informations non dégradables sont des images de contrôle.

Dans le cas où ledit signal est formé par des images présentant une structure de prédiction temporelle hiérarchique, chaque image d'un niveau hiérarchique temporel étant codée par prédiction spatiale ou par prédiction temporelle à partir d'au moins une image du même niveau temporel ou d'un niveau temporel précédent dans la hiérarchie, ladite étape d'identification peut considérer qu'au moins lesdites images d'un niveau temporel pré-déterminé (qui forme les informations non dégradables pour le décodage des niveaux hiérarchiques supérieurs) sont des images de contrôle.

Selon un premier mode de réalisation de l'invention, ladite étape d'identification comprend une étape de lecture, dans ledit signal, d'au moins une information d'identification desdites images de contrôle.

Cette information permet au décodeur de distinguer, dans le flux, les images ayant un traitement imposé. Selon un autre mode de réalisation, l'identification peut être implicite, et ne pas nécessiter une telle information d'identification (par exemple parce que le terminal sait, a priori, quelles sont les images de contrôle).

Ladite étape d'identification peut également comprendre, selon les modes de réalisation, une étape de lecture, dans ledit signal, d'au moins une information de traitement pour au moins une desdites images de contrôle, précisant le ou lesdits outils de décodage prédéterminés à appliquer à ladite image de contrôle.

Il est ainsi possible d'imposer des traitements distincts à différentes images de contrôle, par exemple en fonction de caractéristiques particulières de ces images (mouvement, type d'image,...).

Dans une approche particulière de l'invention, le procédé met en oeuvre sélectivement une pluralité de chaînes d'outils de décodage, comprenant chacune au moins un desdits outils, et lesdites étapes d'application utilisent, pour chacune desdites images, une desdites chaînes d'outils de décodage.

Selon les modes de réalisation de l'invention, lesdits outils peuvent notamment appartenir au groupe comprenant :
- des outils de prédiction spatiale tenant compte de tout ou partie des coefficients fréquentiels d'au moins une partie d'au moins une image ;
- des outils de prédiction temporelle, utilisant des filtres d'interpolation de tailles différentes ;
- des outils de prise en compte du mouvement, pixelliques ou sous-pixelliques ;
- des outils de filtrage d'un effet de blocs ;
- des outils de compensation de mouvement, utilisant différents modèles de mouvement ;
- des outils de synthèse d'image ;
- au moins deux outils assurant une même fonction de décodage et utilisant des niveaux de représentation binaire différents.

Les outils disponibles dans les terminaux peuvent donc être variés, et adaptés à différents types de terminaux, sans a priori sur le codage (dès lors que sont présents les outils imposés pour les images de contrôle). Ils peuvent également être évolutifs.

L'invention concerne également un terminal de décodage d'un signal d'images numérique, mettant en oeuvre un décodage à complexité variable, tel que décrit ci-dessus.

Un tel terminal comprend notamment :
- des moyens d'identification, parmi lesdites images, de premières images, dites images de contrôle, et de secondes images, dites images intermédiaires ;
- des moyens d'application, à chacune desdites images de contrôle, d'au moins un outil de décodage prédéterminé, imposé par ledit signal ;
- des moyens d'application, à au moins une desdites images intermédiaires, d'au moins un outil de décodage sélectionné par ledit terminal de décodage.

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de décodage décrit précédemment.

L'invention concerne par ailleurs un procédé de codage d'un signal d'images numérique, destiné à être décodé dans au moins un terminal de décodage mettant en oeuvre un décodage à complexité variable selon certains modes de réalisation du procédé décrit ci-dessus.

Ce procédé de codage comprend notamment les étapes suivantes :
- identification, parmi lesdites images, de premières images, dites images de contrôle, et de secondes images, dites images intermédiaires, chacune desdites images de contrôle devant être traitée, dans le ou lesdits terminaux de décodage, par au moins un outil de décodage prédéterminé, et au moins une desdites images intermédiaires pouvant être traitée par au moins un outil de décodage sélectionné par un terminal de décodage ;
- insertion, dans ledit signal, d'au moins une information d'identification desdites images de contrôle.

Cette information d'identification permet, au décodage, de distinguer les images de contrôle, qui subissent un décodage imposé, et les images intermédiaires, que le terminal est libre de décoder comme il le souhaite, en fonction de ses moyens.

Dans un premier mode de réalisation particulier, ladite étape d'insertion comprend une étape de codage d'un champ de données d'identification, associé à chacune desdites images.

Ainsi, le décodeur sait, en débutant le traitement d'une image courante par la lecture de ce champ de données d'identification, s'il s'agit d'une image de contrôle ou d'une image intermédiaire.

Selon un deuxième mode de réalisation, ladite étape d'insertion comprend une étape de codage d'un champ de données de préambule, définissant la structure dudit signal, en termes de répartition desdites images de contrôle et desdites images intermédiaires.

Dans ce cas, le décodeur sait, au moment où il débute le traitement du signal, quelles seront les images du flux qui sont des images de contrôle. Ce champ de données peut être répété périodiquement, notamment pour les signaux sur lequel un terminal peut se connecter à tout instant, en cours de diffusion.

Selon un aspect particulier de l'invention, ladite étape d'insertion comprend une étape de codage, pour au moins une desdites images de contrôle, d'une information de type de décodage, définissant le ou lesdits outils de décodage devant être utilisés pour le décodage de la ou desdites images de contrôle.

Il est ainsi possible de proposer des codages différents pour les images de contrôle, en fonction des besoins.

Dans le cas où au moins un desdits terminaux de décodage met en oeuvre sélectivement une pluralité de chaînes d'outils de décodage, comprenant chacune au moins un desdits outils, cette information de type de décodage peut désigner une desdites chaînes d'outils de décodage.

L'invention concerne encore un dispositif de codage d'un signal d'images numérique mettant en oeuvre le procédé présenté ci-dessus, et comprenant :
- des moyens d'identification, parmi lesdites images, de premières images, dites images de contrôle, et de secondes images, dites images intermédiaires, chacune desdites images de contrôle devant être traitée, dans le ou lesdits terminaux de décodage, par au moins un outil de décodage prédéterminé, et au moins une desdites images intermédiaires pouvant être traitée par au moins un outil de décodage sélectionné par un terminal de décodage ;
- des moyens d'insertion, dans ledit signal, d'au moins une information d'identification desdites images de contrôle.

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de codage décrit ci-dessus.

L'invention concerne encore un signal d'images numérique produit par le procédé de codage décrit ci-dessus, et destiné à être décodé dans au moins un terminal de décodage mettant en oeuvre un décodage à complexité variable, permettant une sélection d'au moins un outil de décodage, parmi au moins deux outils de décodage disponibles.

Un tel signal comprend des premières images, dites images de contrôle, et des secondes images, dites images intermédiaires, chacune desdites images de contrôle devant être traitée, dans le ou lesdits terminaux de décodage, par au moins un outil de décodage prédéterminé, et au moins une desdites images intermédiaires pouvant être traitée par au moins un outil de décodage sélectionné par un terminal de décodage, et au moins une information d'identification desdites images de contrôle.

Selon certains modes de réalisation, un tel signal peut comprendre d'une part des informations non dégradables et d'autre part des informations dégradables, obtenues par prédiction spatiale et/ou temporelle à partir d'au moins une information dégradable ou non dégradable.

L'invention concerne enfin un support de données portant au moins un tel signal d'images numérique.

### 4. liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre le principe général de l'invention, avec trois chemins, ou chaînes, de décodage possibles ;
- la figure 2 présente un exemple de schéma de codage, connu en soi ;
- la figure 3 est un schéma de décodage, également connu, adapté au codage de la figure 2 ;
- la figure 4 illustre schématiquement la distinction des images de contrôle et des images intermédiaires, selon l'invention ;
- la figure 5 est un schéma d'un exemple de décodage selon l'invention, adapté au codage de la figure 2.

### 5. description détaillée d'un mode de réalisation de l'invention

### 5.1 rappel du principe de l'invention

L'invention propose donc une solution innovante au problème de scalabilité en complexité. A partir de la même quantité d'information reçue, chaque décodeur peut choisir la complexité de décodage qu'il est capable d'assumer, et/ou qui correspond à une qualité requise par l'utilisateur, en utilisant certains outils plutôt que d'autres pour des opérations de décodage.

Cette approche est particulièrement, mais non exclusivement, intéressante dans le cadre d'applications vidéo adressant des terminaux de capacités de décodage différentes (par exemple des terminaux mobiles).

Le processus de décodage d'un flux comporte un processus de lecture des informations contenues dans le flux (ce processus correspond au décodage syntaxique) et un processus de reconstruction des données à partir des informations lues. L'invention est indépendante du processus de lecture des informations, et s'applique au processus de reconstruction effectué lors du décodage.

De ce fait, il est à noter que l'invention s'applique à n'importe quel standard de compression de données, notamment vidéo, scalable ou non. Contrairement aux approches actuelles proposées pour la scalabilité, elle propose en effet une approche de la scalabilité en complexité au niveau des opérations mises en oeuvre lors du processus de reconstruction effectué au décodage, indépendamment de la syntaxe utilisée pour coder et transmettre le flux vidéo.

Ainsi, l'invention diffère des techniques connues permettant d'adapter la complexité au décodage d'un flux, qui ont l'inconvénient d'imposer ce choix à l'encodeur ou de partir rapidement en dérive.

Notamment, l'approche de l'invention diffère de celle de SVC et d'autres systèmes scalables connus, en proposant un système de décodage dans lequel des étapes du décodage peuvent être effectuées à l'aide d'outils plus ou moins complexes, le choix entre ces outils s'opérant uniquement au niveau du décodeur.

L'invention propose également, pour que cette approche soit efficace et fiable, un mécanisme de contrôle de la dérive entre le codeur et le décodeur lorsque des outils moins complexes sont utilisés au décodage. Ce mécanisme repose sur la distinction entre deux types d'images :
- des images dites de contrôle, pour lesquels le traitement de décodage est imposé par le codeur (ou par une définition, par exemple normalisée, du codage) ;
- des images dites intermédiaires, que les terminaux de décodage sont libres de décoder comme ils le souhaitent (que ce soit en appliquant un traitement dégradé ou un traitement amélioré, ou le même traitement que celui utilisé au codage).

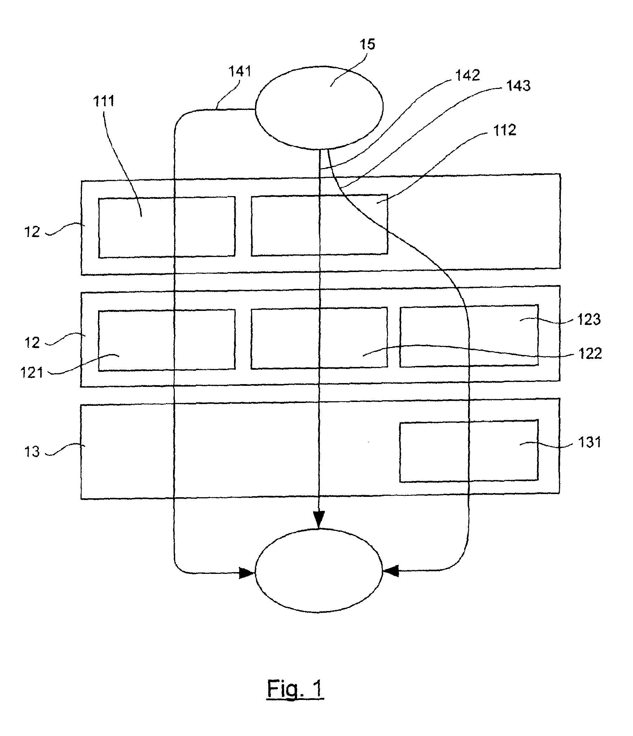

La figure 1 illustre de façon générale le processus de décodage selon l'invention. Ce décodage comporte un certain nombre d'étapes, tels que :
- étape 11 : décodage des résidus ;
- étape 12 : compensation de mouvement ;
- étape 13: synthèse de données.

Chaque étape peut être réalisée avec des outils différents. Par exemple, le décodage 11 des résidus (coefficients transformés résultant d'une DCT appliquée au codage) peut être assuré par :
- un outil 111 à complexité réduite, ne prenant en compte que le coefficient DC (composante continue) de la transformation DCT ;
- un outil 112 à complexité plus importante, prenant en compte l'ensemble des coefficients DC et AC de la DCT.

D'autres outils, non représentés, peuvent ne prendre en compte qu'une partie des coefficients AC.

L'étape 12 de compensation de mouvement peut être mise en oeuvre par :
- un outil 121 de compensation travaillant au pixel près ;
- un outil 122 de compensation travaillant au demi-pixel près ;
- un outil 123 de compensation travaillant au quart-pixel près ;

L'étape 13 peut comprendre un unique outil 131 de synthèse de texture, dont la mise en oeuvre est optionnelle.

Ces outils, leur nombre et leur répartition, sont donnés à titre d'exemple de principe de l'invention, et il est clair que de nombreuses variantes et adaptations sont possibles.

Le décodeur de l'invention adapte son processus de décodage en fonction de la complexité des outils qu'il est capable de mettre en oeuvre, et dont il dispose (il n'est pas obligatoire que tous les décodeurs disposent de tous les outils, puisque la sélection de ces derniers ne se fait qu'au décodage. Au contraire, l'invention permet de fournir de nombreux types de décodeurs, et des décodeurs évolutifs, qui peuvent être équipés de nouveaux outils, par exemple par téléchargement, sans que cela ne nécessite d'adaptation de la norme de codage).

Plusieurs chemins, ou chaînes, de décodage 141, 142, 143 sont alors possibles, avec un même flux de données 15 reçu ou lu.

Par exemple, le chemin 141, qui utilise les outils 111 et 121, est un chemin de décodage de basse complexité, et le chemin 143, qui utilise les outils 112, 123 et 131 est un chemin de décodage de haute complexité. Le chemin 142, utilisant les outils 112 et 122 est un chemin de décodage de complexité moyenne. On note que certains outils peuvent être partagés par plusieurs chemins.

Un de ces chemins peut être compatible avec un chemin de décodage défini par n'importe quel standard de compression, par exemple H.264/AVC.

Afin de contrôler la dérive entre le codeur et le décodeur, l'invention prévoit que certaines images prédéterminées, dites images de contrôle, sont décodées en suivant un chemin imposé, prédéterminé. Par exemple, le chemin 141 sera utilisé de manière obligatoire pour le décodage de ces images, quelles que soient les capacités de traitement disponibles pour le décodeur.

Ces images de contrôle permettent de contrôler la dérive entre le codeur et le décodeur. Le chemin suivi par les images de contrôle n'est pas forcément le chemin de complexité minimale, ni forcément non plus le niveau de complexité maximale. Il peut être le même pour toutes les images de contrôle, ou varier selon le type ou le niveau temporel de l'image de contrôle, ou être précisé pour chaque image par le codeur.

Le décodage n'est en revanche pas imposé pour les autres images, dites images intermédiaires. Le décodeur choisit donc, pour ces images, le chemin le plus adapté, en fonction de critères tels que ses ressources, les outils dont il dispose, une requête de l'utilisateur, une taille d'image restituée...

### 5.2 exemple de mise en oeuvre de l'invention

L'invention peut notamment être appliquée dans tous les codeurs vidéo. Le mode de réalisation décrit ci-après s'applique en particulier dans le contexte des travaux de mise en place de la future norme H.265. On ne précise cependant pas la syntaxe du codeur utilisé, le mécanisme de décodage décrit s'appliquant à tous codeurs vidéo existants.

### 5.2.1 schéma de codage général

Comme déjà indiqué, l'invention permet de ne pas imposer de conditions particulières au codage (si ce n'est, dans certains modes de réalisation, un repérage explicite des images de contrôle et/ou une indication explicite du chemin de décodage à utiliser pour celles-ci).

Le codeur utilise donc un schéma classique par prédiction intra et inter images, par exemple un codeur H.264. Des images I sont codées par prédiction spatiale, des images P et B sont codées par prédiction spatiale ou temporelle par rapport à d'autres images I, P ou B codées-décodées ou synthétisées. Les images synthétisées servant à la prédiction temporelle sont créées par exemple par un mécanisme de synthèse de texture.

Les images sont découpées en blocs. Pour chaque bloc est codé un bloc résiduel correspondant au bloc original diminué d'une prédiction. Les coefficients de ce bloc sont quantifiés après une éventuelle transformation, puis codés par un codeur entropique.

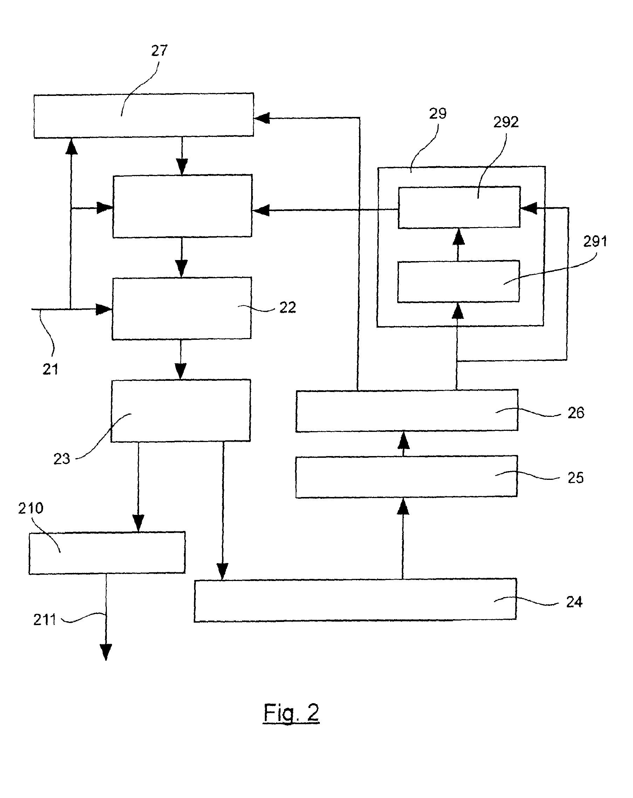

La figure 2 rappelle le principe général d'un tel codage.

Les images à coder 21 sont fournies en entrée d'un module 22 de décision du type de codage. Si l'image à coder est une image I, elle est découpée en blocs et codée par prédiction spatiale uniquement. Chaque bloc de l'image est codé (23) en utilisant une prédiction spatiale. La prédiction pour le bloc est formée à partir de blocs codés-décodés à l'intérieur de l'image courante. Les résidus issus de la différence entre le bloc et la prédiction sont transformés, quantifiés et codés par un codeur entropique.

L'image est reconstruite en effectuant (24) les opérations inverses : décodage entropique, quantification inverse, transformation inverse, ajout de la prédiction. L'image reconstruite subit une étape 25 de réduction des effets de blocs mise en oeuvre à l'aide de filtrage, puis elle est ajoutée à la liste 26 des images de référence.

Si l'image à coder est une image P ou B, le module d'estimation de mouvement du codage 27 calcule le mouvement entre l'image courante à coder et une ou plusieurs images de référence contenues dans la liste 26 des images de référence. Le module d'estimation de mouvement 27 fournit les paramètres du mouvement (vecteurs de mouvement, images de référence utilisées) au module de calcul de la prédiction 28.

Une étape 29 d'analyse-synthèse peut également être effectuée à partir de l'image de la liste des images de référence afin de créer une image synthétisée pouvant servir de prédiction. L'analyse 291 calcule les paramètres nécessaires à la synthèse (création) 29 d'une nouvelle image (image synthétisée).

Pour chaque bloc de l'image à coder, le module de décision 22 choisit la meilleure prédiction parmi les prédictions possibles : prédiction temporelle à partir d'une ou plusieurs images de référence, prédiction spatiale ou prédiction à partir de l'image synthétisée. Les résidus issus de la différence entre le bloc et la prédiction sont transformés, quantifiés et codés par un codeur entropique.

Si l'image doit servir de référence pour une image future à coder, l'image codée est reconstruite (24) en effectuant les opérations inverses : quantification inverse, transformation inverse, ajout de la prédiction. L'image reconstruite subit une étape de réduction des effets de blocs mise en oeuvre à l'aide de filtrages, puis elle est ajoutée à la liste des images de référence.

Le signal codé 210, ou flux binaire, peut être ensuite transmis, ou stocké. D'autres traitements préalables de réduction de débit, tels qu'un codage entropique, sont possibles. Plus généralement, d'autres moyens de codage peuvent être utilisés.

### 5.2.2 schéma de décodage général

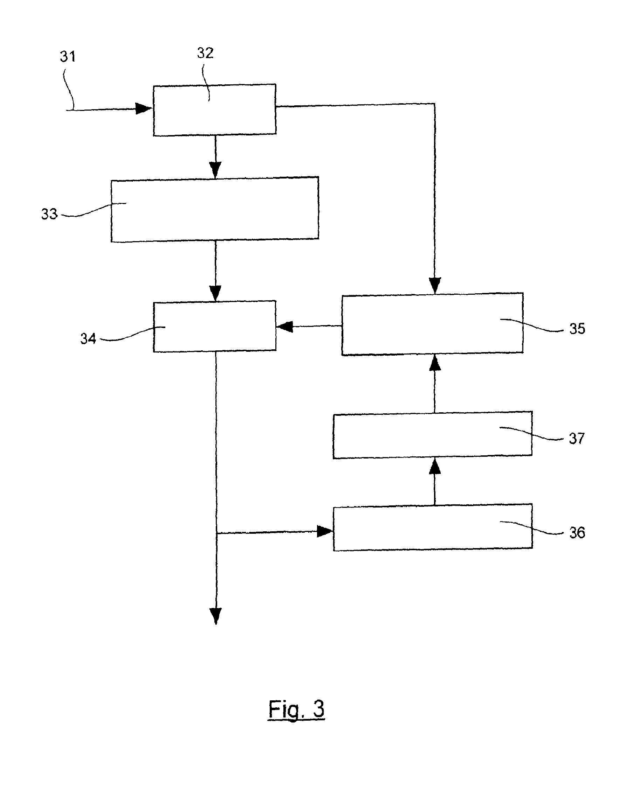

La figure 3 illustre le mécanisme général du décodage. Le flux binaire reçu 31 est envoyé à un décodeur syntaxique 32 qui effectue le décodage entropique des données de l'image courante. Pour chaque bloc de l'image à reconstruire, les coefficients sont envoyés au module 33 qui effectue la quantification inverse et la transformation inverse. La prédiction de chaque bloc est calculée (34) puis ajoutée (35) aux résidus reconstruits. Le décodeur syntaxique 32 extrait également les informations nécessaires à la prédiction, tels que des paramètres de mouvement, de synthèse, de types de prédiction...

Si l'image sert de référence pour une image future à décoder, elle subit alors une étape 36 de réduction des effets de blocs mise en oeuvre à l'aide de filtrages, puis elle est ajoutée à la liste des images de référence. On notera que certaines étapes du décodage sont également présentes dans le mécanisme de codage : quantification inverse, transformation inverse, calcul de la prédiction, réduction des effets de blocs.

Des post-traitements peuvent être appliqués sur les images reconstruites afin d'améliorer la qualité de restitution de celles-ci indépendamment des autres (non représentés sur la figure 3).

### 5.3.3 décodage à complexité. variable

Indépendamment des outils utilisés pour le codage des images, chaque décodeur selon l'invention peut adapter sa complexité de décodage en choisissant pour chaque étape du décodage des outils plus ou moins complexes que ceux utilisés au codage.

Par exemple, les opérations suivantes peuvent être effectuées avec une complexité variable :
- lors de la prédiction spatiale : la prédiction peut être formée à partir d'un bloc dont tous les coefficients ont été reconstruits ou bien à partir d'un bloc dont seuls le coefficient continu ou des coefficients basse fréquence ont été reconstruits ;
- lors de la prédiction temporelle : une compensation en mouvement des images de référence est effectuée. Dans le cas de mouvements sous-pixelliques, cette compensation en mouvement nécessite une interpolation de l'image de référence à l'aide d'un filtre d'interpolation, la taille du filtre utilisé fait varier la complexité. Plus le filtre est long plus l'opération d'interpolation est complexe ;
- la précision du mouvement impacte sur la complexité de la prédiction. Un mouvement sous-pixellique nécessite une interpolation par rapport à un mouvement pixellique ;
- afin d'améliorer la qualité des images servant de référence, une étape de réduction des effets de blocs peut être appliquée sur les images de référence avant de les stocker dans la liste, cette étape est mise en oeuvre à l'aide de filtrages, le décodeur peut ne pas faire ces filtrages ou en faire une version moins complexe ;
- le modèle de mouvement utilisé joue sur la complexité de la compensation en mouvement: une translation nécessite des opérations simples d'addition alors qu'une transformation affine (c'est-à-dire dans un modèle évolué de codeur vidéo) implique des opérations de multiplications plus complexes. Le décodeur peut alors prendre un modèle simplifié de mouvement pour réduire la complexité ;
- la précision, ou résolution, binaire des calculs effectués influe également sur la complexité des opérations. Plus la précision est grande, plus les données ont besoin d'espace mémoire (par exemple, on met en oeuvre des calculs à précision plus grande pour des images avec des dynamiques de niveaux couleurs sur 12 bits que pour des images à niveaux de couleurs sur 8 bits) ;
- l'étape de synthèse pour créer les images synthétisées pouvant servir de prédiction peut être complexe à réaliser selon l'algorithme choisi, la complexité de l'algorithme allant souvent de pair avec sa performance. Cette étape peut être même complètement supprimée du décodage de l'image courante, et remplacée par un mode de prédiction moins complexe (par exemple mode de prédiction intra, ou de prédiction par compensation en mouvement de type "SKIP").

Ces différentes possibilités de choix de complexité, et d'autres, permettent de définir de façon adaptée à chaque décodeur, les outils illustrés en figure 1. On comprend que ces outils ne sont pas forcément des modules complètement indépendants les uns des autres, tel qu'illustré par cette figure 1 pour des raisons de simplification de l'explication, mais peuvent correspondre à un même module, paramétré de façons différentes (par exemple nombre de bits pris en compte, nombre de coefficients DCT traités...).

### 5.2.3 les images de contrôle

La section suivante explique le mécanisme de contrôle de la dérive selon l'invention, dans un décodeur à complexité variable.

### a) le contrôle de la dérive

Pour éviter toute dérive dans le signal reconstruit au décodeur, les codeurs classiques fonctionnent en boucle fermée, c'est-à-dire que la prédiction temporelle ou spatiale au codeur est faite à l'aide d'images ou de parties de l'image courante codées-décodées.

L'invention permet de s'affranchir de cette contrainte (au moins sur une partie des images à décoder).

En effet, selon l'invention, le codeur ne peut pas prévoir quelle sera la qualité de chaque image reconstruite par chaque décodeur (le codeur ne pourrait prévoir que la qualité maximale, obtenue lorsque le décodeur décode au niveau de complexité "nominal"). En effet, en fonction de ses ressources ou de ses besoins, un décodeur peut choisir d'effectuer les étapes de décodage avec une complexité moindre que celles faites au codage.

Les images qui seront reconstruites au décodeur seront donc différentes de celles reconstruites au codeur et les images servant de prédiction au décodeur seront différentes de celles utilisées au codeur. Il existe donc un risque de dérive.

Afin de contrôler cette dérive potentielle entre le codeur et le décodeur, le codeur impose (de façon implicite ou explicite) au décodeur de décoder certaines images avec un niveau de complexité déterminé, de manière à disposer régulièrement d'une référence stable (les images décodées au décodeur sont dans ce cas identiques à celles codées-décodées par l'encodeur). On appelle ici ces images les images de contrôle.

On notera que pour une image de contrôle, le décodeur peut décoder additionnellement cette image avec un niveau de complexité supérieur, ceci par exemple pour des fins d'affichage d'une image de meilleure qualité. Le décodeur produit alors deux sorties pour cette image :
- une version à complexité contrôlée servant par la suite d'image de référence pour le décodage d'autres images, et
- une version à complexité libre pouvant servir à l'affichage ou bien encore d'image de référence pour des images autre que les images de contrôle.

### b) la signalisation des images de contrôle

L'invention propose optionnellement une signalisation permettant de distinguer les images de contrôle des autres images du flux. Cette signalisation peut se faire de manière explicite ou implicite.

Une signalisation explicite peut être faite :
- par l'insertion d'un drapeau « image dégradable » (appelé par exemple "fast_decoding_allowed_flag") dans la syntaxe de l'image courante, une valeur "VRAI" indiquant que le décodage de cette image n'est pas essentiel, et peut donc être dégradé. Une valeur "FAUSSE" indique que le processus de décodage de cette image est imposée. Il est à noter que ce drapeau est différent de la notion d'images de référence (images servant à la prédiction d'autres images) existante dans les normes de compression, car une image de référence peut également être marquée "dégradable" ;
- par l'insertion d'un indice de complexité de décodage pour chaque image. Une valeur particulière (par exemple : -1) indiquant que l'image doit être décodée selon le chemin pré-déterminé, une autre valeur particulière (ex : "any") indiquant que l'image peut être décodée à un niveau arbitraire, les valeurs standards (ex : 0, 1, 2...) indiquant le niveau de complexité auquel cette image doit être décodée.

L'invention peut également s'appliquer à des standards existants, en ajoutant une signalisation du caractère dégradable ou essentiel (pour les images de contrôle) des images. Cette signalisation peut par exemple se faire au moyen de messages SEI dans MPEG-4 AVC, ou plus généralement via des champs "user data" génériques.

La signalisation implicite peut être faite sans ajout de syntaxe par rapport à celle existante (par exemple celle d'un standard de compression existant). Les images de contrôle sont alors déterminées par :
- une valeur particulière de l'élément de syntaxe d'image référence dans MPEG-4 AVC (Nal_Ref_Idc) ;
- l'élément de syntaxe de décodage à la qualité minimale de MPEG-4 AVC scalable, ou l'élément de syntaxe de niveau temporel, ou l'élément de syntaxe du niveau de priorité d'une image ;
- le type de l'image courante: I ou P.

Selon une autre variante, la liste des images de contrôle, ou les moyens de les repérer, peuvent être définis dans un descripteur présent au début du flux, et/ou fourni périodiquement.

Il est à noter qu'il n'est pas obligatoire que toutes les images de contrôle soient traitées de la même façon. Il est possible que la signalisation indique, pour chaque image de contrôle (ou pour un ensemble d'images de contrôle) le chemin particulier à utiliser.

### c) décodage à complexité variable avec images de contrôle

Au décodage, selon ses capacités, et en tenant compte de la signalisation éventuelle, le décodeur peut choisir la complexité des opérations de décodage qu'il souhaite effectuer.

Plus précisément, pour les images qui ne sont pas des images de contrôle, et pour chaque étape de décodage d'une telle image, il choisit parmi les outils possibles pour cette étape, quel outil utiliser en fonction notamment de la complexité de chaque outil. En d'autres termes, le décodeur a le choix du chemin, ou chaîne, de décodage (figure 1).

En revanche, pour certaines images prédéterminées, les images de contrôle, le décodeur choisira systématiquement les outils associés à la complexité nominale imposée par l'encodeur pour le stockage de l'image de référence ou ceux définis par la norme de compression vidéo à laquelle il est conforme.

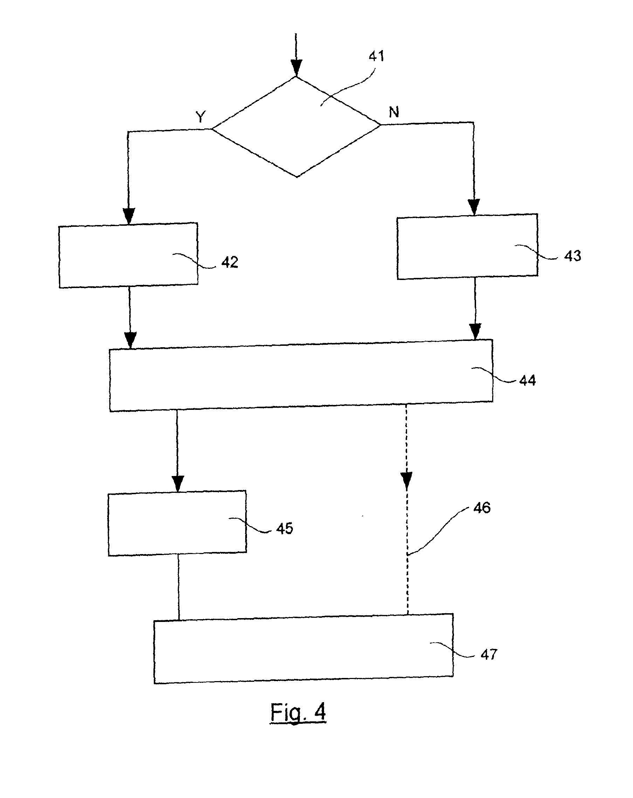

Cette approche est illustrée par la figure 4. Si l'image est une image de contrôle (test 41), on identifie (42) le chemin imposé, utilisé par le codeur (soit de façon implicite, soit de façon explicite, comme précisé ci-dessus). Si ce n'est pas le cas, il s'agit d'une image dite intermédiaire, et le décodeur peut sélectionner (43) le chemin le plus adapté, et par exemple un chemin de qualité inférieure, si le décodeur a des ressources limitées.

On effectue ensuite le décodage 44, selon le chemin identifié. S'il s'agit d'une image de contrôle, elle est stockée (45) pour utilisation lors du décodage des images suivantes, de façon à éviter la dérive.

Optionnellement, le décodeur peut utiliser un second niveau (a priori supérieur) de complexité des outils pour reconstruire une seconde image 46 (destinée typiquement à l'affichage, ou utilisable pour la prédiction d'une image qui ne serait pas une image de contrôle).

Les images décodées sont ensuite restituées (47) sur un écran.

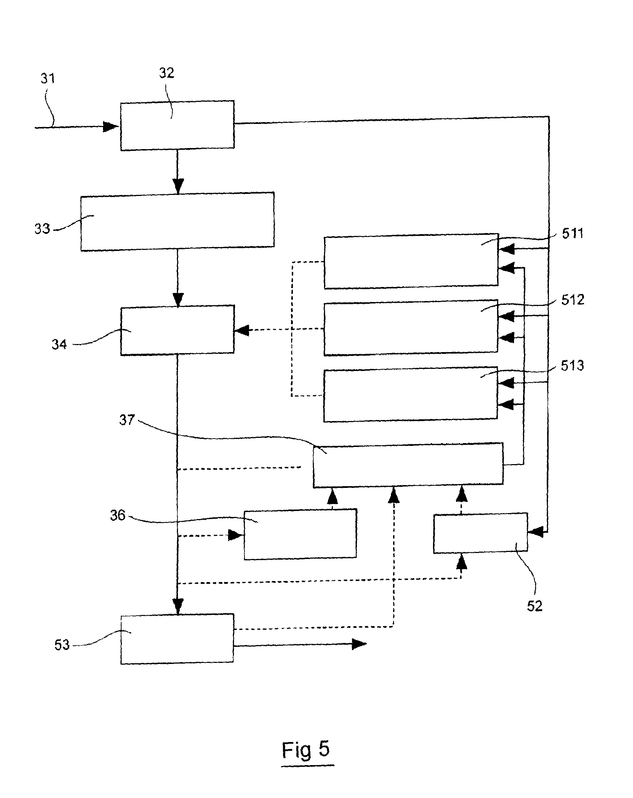

La figure 5 illustre le mécanisme de décodage modifié selon l'invention, par comparaison au mécanisme de la figure 3. Les flèches en pointillés montrent les chemins optionnels que peut suivre le processus de décodage selon l'image qu'il doit décoder et les ressources du décodeur.

Ainsi, le décodage peut par exemple disposer de trois types de calcul de prédiction 511, 512 et 513, présentant des niveaux de complexité différents (le module 511 correspondant par exemple au module 35 de la figure 3, et pouvant être imposé pour les images de contrôle).

Des étapes, ou modules, optionnels peuvent être prévus, tel qu'un module de synthèse 52, qui alimente les modules de prédiction 511, 512 et 513, et/ou des post-traitement 53 d'amélioration de l'image (par exemple par filtrage).

On note également que d'autres modules, tels que la réduction des effets de blocs 36, deviennent optionnels, pour toutes les images intermédiaires (images qui ne sont pas des images de contrôle).

Le décodage syntaxique 32 peut délivrer des informations sur le type d'images, et notamment signaler les images de contrôle (et le cas échéant le chemin de décodage à utiliser pour celles-ci), si ces informations ne sont pas implicites.

On comprend que la figure 5 ne donne qu'un exemple parmi de nombreux possibles, puisque l'un des avantages de l'invention est de permettre une coexistence aisée de plusieurs types de décodeurs, de complexités différentes. On peut donc aisément ajouter ou supprimer des modules, ou des étapes, ou les paramétrer de façons différentes, pour définir différents décodeurs (dès lors que ceux-ci disposent des moyens minimum pour traiter les images de contrôle).

Par exemple, un décodeur très simple pourra ne disposer que de deux chemins, le chemin imposé pour les images de contrôle, et un chemin simplifié, ou dégradé, pour les images intermédiaires. En revanche, un décodeur « haut de gamme » disposera, outre le chemin imposé pour les images de contrôle, d'au moins un chemin de qualité supérieure, qu'il pourra d'ailleurs utiliser aussi bien pour les images intermédiaires que pour les images de contrôle, pour leur restitution (le chemin imposé restant utilisé pour l'utilisation lors du décodage des images suivantes).

La pluralité de chemins disponibles dans un tel décodeur permettra d'optimiser le décodage en fonction du type d'image (mouvement, couleurs,...), du type de contenus (film, sport, documentaire...), d'un débit de transmission disponible, d'une taille d'écran ou d'une résolution sélectionnée, d'une demande de l'utilisateur...

L'approche de l'invention permet de fournir de nouveaux décodeurs, utilisant des techniques de décodage améliorées (par exemple un nouveau filtre) sans modifier le codage. Il est également possible de mettre à jour des décodeurs, par exemple en téléchargeant un nouvel outil ou une nouvelle chaîne d'outils, toujours sans agir sur le codage.

## Revendications

1. Procédé de décodage d'un signal d'images numérique dans un terminal de décodage, mettant en oeuvre un décodage à complexité variable, permettant, pour au moins une étape du décodage, une sélection d'au moins un outil de décodage, parmi au moins deux outils de décodage disponibles,
comprenant les étapes suivantes :
- lecture, dans ledit signal, d'au moins une première information d'un type I, P ou B des images dudit signal;
- lecture, dans ledit signal, d'au moins une deuxième information d'identification parmi lesdites images, de premières images, dites images de contrôle, ladite deuxième information d'identification signalant explicitement qu'une image de référence de type I, P ou B servant à la prédiction d'autres images est dégradable ou non;
- à partir de ladite deuxième information d'identification, identification, parmi lesdites images, desdites images de contrôle correspondant aux images non-dégradables, et de secondes images, dites images intermédiaires correspondant aux images dégradables ;
- application, à chacune desdites images de contrôle, pour au moins une étape du décodage, d'au moins un outil de décodage prédéterminé, imposé par ledit signal ;
- application, à au moins une desdites images intermédiaires, pour au moins une étape du décodage, d'au moins un outil de décodage sélectionné par ledit terminal de décodage, et non imposé par ledit signal.

2. Procédé de décodage selon la revendication 1, **caractérisé en ce que** ledit signal comprend d'une part des informations non dégradables et d'autre part des informations dégradables, et **en ce que** ladite étape d'identification considère qu'au moins lesdites informations non dégradables sont des images de contrôle.

3. Procédé de décodage selon l'une quelconque des revendications 1 et 2, **caractérisé en ce que** ladite étape d'identification comprend une étape de lecture, dans ledit signal, d'au moins une information de traitement pour au moins une desdites images de contrôle, précisant le ou lesdits outils de décodage prédéterminés à appliquer à ladite image de contrôle.

4. Procédé de décodage selon l'une quelconque des revendications 1 à 3, **caractérisé en ce qu'**il met en oeuvre sélectivement une pluralité de chaînes d'outils de décodage, comprenant au moins un desdits outils,
et **en ce que** lesdites étapes d'application utilisent, pour une desdites images, une desdites chaînes d'outils de décodage.

5. Procédé de décodage selon l'une quelconque des revendications 1 à 4, **caractérisé en ce que** lesdits outils appartiennent au groupe comprenant :
- des outils de prédiction spatiale tenant compte de tout ou partie des coefficients fréquentiels d'au moins une partie d'au moins image ;
- des outils de prédiction temporelle, utilisant des filtres d'interpolation de tailles différentes ;
- des outils de prise en compte du mouvement, pixelliques ou sous-pixelliques ;
- des outils de filtrage d'un effet de blocs ;
- des outils de compensation de mouvement, utilisant différents modèles de mouvement ;
- des outils de synthèse d'image ;
- au moins deux outils assurant une même fonction de décodage et utilisant des niveaux de représentation binaire différents.

6. Terminal de décodage d'un signal d'images numérique, mettant en oeuvre un décodage à complexité variable, permettant, pour au moins une étape du décodage, une sélection d'au moins un outil de décodage, parmi au moins deux outils de décodage disponibles,
comprenant :
- des moyens de lecture, dans ledit signal, d'au moins une première information d'identification d'un type I, P ou B des images dudit signal ;
- des moyens de lecture, dans ledit signal, d'au moins une deuxième information d'identification parmi lesdites images, de premières images, dites images de contrôle, ladite deuxième information d'identification signalant explicitement qu'une image de référence de type I, P, ou B servant à la prédiction d'autres images est dégradable ou non;
- des moyens d'identification, identifiant à partir de ladite deuxième information d'identification, parmi lesdites images, lesdites images de contrôle correspondant aux images non-dégradables, et de secondes images, dites images intermédiaires correspondant aux images dégradables;
- des moyens d'application, à chacune desdites images de contrôle, pour au moins une étape du décodage, d'au moins un outil de décodage prédéterminé, imposé par ledit signal ;
- des moyens d'application, à au moins une desdites images intermédiaires, pour au moins une étape du décodage, d'au moins un outil de décodage sélectionné par ledit terminal de décodage, non imposé par ledit signal.

7. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de décodage selon l'une au moins des revendications 1 à 5.

8. Procédé de codage d'un signal d'images numérique, destiné à être décodé dans au moins un terminal de décodage mettant en oeuvre un décodage à complexité variable, permettant, pour au moins une étape du décodage, une sélection d'au moins un outil de décodage, parmi au moins deux outils de décodage disponibles,
**caractérisé en ce qu'**il comprend les étapes suivantes :
- identification, parmi lesdites images, de premières images, dites images de contrôle, et de secondes images, dites images intermédiaires, chacune desdites images de contrôle devant être traitée, dans le ou lesdits terminaux de décodage, pour au moins une étape du décodage, par au moins un outil de décodage prédéterminé, et au moins une desdites images intermédiaires pouvant être traitée, pour au moins une étape du décodage, par au moins un outil de décodage sélectionné par un terminal de décodage ;
- insertion, dans ledit signal d'au moins une première information d'identification d'un type I, P ou B des images dudit signal ;
- insertion, dans ledit signal, d'au moins une deuxième information d'identification desdites images de contrôle, ladite deuxième information d'identification signalant explicitement qu'une image de référence de type I, P ou B servant à la prédiction d'autres images est dégradable ou non.

9. Dispositif de codage d'un signal d'images numérique, destiné à être décodé dans au moins un terminal de décodage mettant en oeuvre un décodage à complexité variable, permettant une sélection, pour au moins une étape du décodage, d'au moins un outil de décodage, parmi au moins deux outils de décodage disponibles,
**caractérisé en ce qu'**il comprend :
- des moyens d'identification, parmi lesdites images, de premières images, dites images de contrôle, et de secondes images, dites images intermédiaires, chacune desdites images de contrôle devant être traitée, dans le ou lesdits terminaux de décodage, pour au moins une étape du décodage, par au moins un outil de décodage prédéterminé, et au moins une desdites images intermédiaires pouvant être traitée, pour au moins une étape du décodage, par au moins un outil de décodage sélectionné par un terminal de décodage ;
- des moyens d'insertion, dans ledit signal d'au moins une première information d'identification d'un type I, P ou B des images dudit signal ;
- des moyens d'insertion, dans ledit signal, d'au moins une deuxième information d'identification desdites images de contrôle, ladite deuxième information d'identification signalant explicitement qu'une image de référence de type I, P ou B servant à la prédiction d'autres images est dégradable ou non.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de codage selon la revendication 8.

11. Signal d'images numérique, destiné à être décodé dans au moins un terminal de décodage mettant en oeuvre un décodage à complexité variable, permettant, pour au moins une étape du décodage, une sélection d'au moins un outil de décodage, parmi au moins deux outils de décodage disponibles, **caractérisé en ce qu'**il comprend des premières images, dites images de contrôle, et des secondes images, dites images intermédiaires, chacune desdites images de contrôle devant être traitée, dans le ou lesdits terminaux de décodage, pour au moins une étape du décodage, par au moins un outil de décodage prédéterminé, et au moins une desdites images intermédiaires pouvant être traitée, pour au moins une étape du décodage, par au moins un outil de décodage sélectionné par un terminal de décodage,
et au moins une première information d'identification d'un type I, P ou B des images dudit signal, et au moins une deuxième information d'identification desdites images de contrôle, ladite deuxième information d'identification signalant explicitement qu'une image de référence de type I, P ou B servant à la prédiction d'autres images est dégradable ou non.

12. Signal selon la revendication 11, **caractérisé en ce que** ledit signal comprend d'une part des informations non dégradables et d'autre part des informations dégradables, obtenues par prédiction spatiale et/ou temporelle à partir d'au moins une information dégradable ou non dégradable.

13. Support de données portant au moins un signal d'images numérique, destiné à être décodé dans au moins un terminal de décodage mettant en oeuvre un décodage à complexité variable, permettant, pour au moins une étape du décodage, une sélection d'au moins un outil de décodage, parmi au moins deux outils de décodage disponibles,
**caractérisé en ce que** ledit signal comprend des premières images, dites images de contrôle, et des secondes images, dites images intermédiaires, chacune desdites images de contrôle devant être traitée, dans le ou lesdits terminaux, pour au moins une étape du décodage, par au moins un outil de décodage prédéterminé, et au moins une desdites images intermédiaires, pour au moins une étape du décodage, pouvant être traitée par au moins un outil de décodage sélectionné par un terminal de décodage,
et au moins une première information d'identification d'un type I, P ou B des images dudit signal, et au moins une deuxième information d'identification desdites images de contrôle, ladite deuxième information d'identification signalant explicitement qu'une image de référence de type I, P ou B servant à la prédiction d'autres images est dégradable ou non.

## Patentansprüche

1. Verfahren zur Dekodierung eines digitalen Bildsignals in einem Dekodierendgerät, bei dem eine Dekodierung mit variabler Komplexität durchgeführt wird, die für mindestens einen Schritt der Dekodierung eine Auswahl mindestens eines Dekodiertools aus mindestens zwei verfügbaren Dekodiertools ermöglicht,
die folgenden Schritte aufweisend:
- Lesen, in dem Signal, mindestens einer ersten Information über einen Typ I, P oder B der Bilder des Signals;
- Lesen, in dem Signal, mindestens einer zweiten Information zur Identifikation, unter den Bildern, von ersten Bildern, Kontrollbilder genannt, wobei die zweite Identifikationsinformation explizit anzeigt, dass ein Referenzbild vom Typ I, P oder B, das zur Vorhersage anderer Bilder dient, degradierbar ist oder nicht;
- ausgehend von der zweiten Identifikationsinformation, Identifikation, unter den Bildern, der Kontrollbilder, die den nicht degradierbaren Bildern entsprechen, und von zweiten Bildern, Zwischenbilder genannt, die den degradierbaren Bildern entsprechen;
- Anwendung, auf jedes der Kontrollbilder, für mindestens einen Schritt der Dekodierung, mindestens eines vorbestimmten Dekodiertools, das durch das Signal vorgegeben wird;
- Anwendung, auf mindestens eines der Zwischenbilder, für mindestens einen Schritt der Dekodierung, mindestens eines Dekodiertools, das durch das Dekodierendgerät ausgewählt wird und nicht durch das Signal vorgegeben wird.

2. Dekodierverfahren nach Anspruch 1, **dadurch gekennzeichnet, dass** das Signal einerseits nicht degradierbare Informationen und andererseits degradierbare Informationen aufweist, und dadurch, dass der Identifikationsschritt davon ausgeht, dass mindestens die nicht degradierbaren Informationen Kontrollbilder sind.

3. Dekodierverfahren nach einem der Ansprüche 1 und 2, **dadurch gekennzeichnet, dass** der Identifikationsschritt einen Schritt des Lesens, in dem Signal, mindestens einer Verarbeitungsinformation für mindestens eines der Kontrollbilder aufweist, welche das oder die vorbestimmten Dekodiertools präzisiert, die auf das Kontrollbild anzuwenden sind.

4. Dekodierverfahren nach einem der Ansprüche 1 bis 3, **dadurch gekennzeichnet, dass** es selektiv mehrere Ketten von Dekodiertools einsetzt, die mindestens eines der Tools aufweisen,
und dadurch, dass in den Anwendungsschritten für eines der Bilder eine der Ketten von Dekodiertools verwendet wird.

5. Dekodierverfahren nach einem der Ansprüche 1 bis 4, **dadurch gekennzeichnet, dass** die Tools zu der Gruppe gehören, welche aufweist:
- Tools zur räumlichen Vorhersage unter Berücksichtigung aller oder eines Teils der Frequenzkoeffizienten mindestens eines Teils mindestens eines Bildes;
- Tools zur zeitlichen Vorhersage unter Verwendung der Interpolationsfilter unterschiedlicher Größen;
- Tools zur Berücksichtigung der Bewegung auf Pixelebene oder Unter-Pixelebene;
- Tools zur Filtration eines Blockeffekts;
- Tools zur Bewegungskompensation unter Verwendung verschiedener Bewegungsmodelle;
- Tools zur Bildsynthese;
- mindestens zwei Tools, die ein und dieselbe Dekodierfunktion gewährleisten und verschiedene Ebenen der binären Darstellung verwenden.

6. Endgerät zur Dekodierung eines digitalen Bildsignals, welches eine Dekodierung mit variabler Komplexität durchführt, die für mindestens einen Schritt der Dekodierung eine Auswahl mindestens eines Dekodiertools aus mindestens zwei verfügbaren Dekodiertools ermöglicht,
welches aufweist:
- Mittel zum Lesen, in dem Signal, mindestens einer ersten Information zur Identifikation eines Typs I, P oder B der Bilder des Signals;
- Mittel zum Lesen, in dem Signal, mindestens einer zweiten Information zur Identifikation, unter den Bildern, von ersten Bildern, Kontrollbilder genannt, wobei die zweite Identifikationsinformation explizit anzeigt, dass ein Referenzbild vom Typ I, P oder B, das zur Vorhersage anderer Bilder dient, degradierbar ist oder nicht;
- Identifikationsmittel, die ausgehend von der zweiten Identifikationsinformation unter den Bildern die Kontrollbilder, die den nicht degradierbaren Bildern entsprechen, und zweite Bilder, Zwischenbilder genannt, die den degradierbaren Bildern entsprechen, identifizieren;
- Mittel zur Anwendung, auf jedes der Kontrollbilder, für mindestens einen Schritt der Dekodierung, mindestens eines vorbestimmten Dekodiertools, das durch das Signal vorgegeben wird;
- Mittel zur Anwendung, auf mindestens eines der Zwischenbilder, für mindestens einen Schritt der Dekodierung, mindestens eines Dekodiertools, das durch das Dekodierendgerät ausgewählt wird und nicht durch das Signal vorgegeben wird.

7. Von einem Kommunikationsnetz aus fernladbares und/oder auf einem computerlesbaren Träger aufgezeichnetes und/oder von einem Prozessor ausführbares Computerprogrammprodukt, **dadurch gekennzeichnet, dass** es Programmcodeanweisungen zur Durchführung des Dekodierverfahrens nach mindestens einem der Ansprüche 1 bis 5 aufweist.

8. Verfahren zur Kodierung eines digitalen Bildsignals, das dazu bestimmt ist, in mindestens einem Dekodierendgerät dekodiert zu werden, welches eine Dekodierung mit variabler Komplexität durchführt, die für mindestens einen Schritt der Dekodierung eine Auswahl mindestens eines Dekodiertools aus mindestens zwei verfügbaren Dekodiertools ermöglicht,
**dadurch gekennzeichnet, dass** es die folgenden Schritte aufweist:
- Identifikation, unter den Bildern, von ersten Bildern, Kontrollbilder genannt, und von zweiten Bildern, Zwischenbilder genannt, wobei jedes der Kontrollbilder in dem oder den Dekodierendgeräten für mindestens einen Schritt der Dekodierung durch mindestens ein vorbestimmtes Dekodiertool verarbeitet werden muss und mindestens eines der Zwischenbilder für mindestens einen Schritt der Dekodierung durch mindestens ein Dekodiertool, das durch ein Dekodierendgerät ausgewählt wird, verarbeitet werden kann;
- Einfügung, in das Signal, mindestens einer ersten Information zur Identifikation eines Typs I, P oder B der Bilder des Signals;
- Einfügung, in das Signal, mindestens einer zweiten Information zur Identifikation der Kontrollbilder, wobei die zweite Identifikationsinformation explizit anzeigt, dass ein Referenzbild vom Typ I, P oder B, das zur Vorhersage anderer Bilder dient, degradierbar ist oder nicht.

9. Vorrichtung zur Kodierung eines digitalen Bildsignals, das dazu bestimmt ist, in mindestens einem Dekodierendgerät dekodiert zu werden, welches eine Dekodierung mit variabler Komplexität durchführt, die für mindestens einen Schritt der Dekodierung eine Auswahl mindestens eines Dekodiertools aus mindestens zwei verfügbaren Dekodiertools ermöglicht,
**dadurch gekennzeichnet, dass** sie aufweist:
- Mittel zur Identifikation, unter den Bildern, von ersten Bildern, Kontrollbilder genannt, und von zweiten Bildern, Zwischenbilder genannt, wobei jedes der Kontrollbilder in dem oder den Dekodierendgeräten für mindestens einen Schritt der Dekodierung durch mindestens ein vorbestimmtes Dekodiertool verarbeitet werden muss und mindestens eines der Zwischenbilder für mindestens einen Schritt der Dekodierung durch mindestens ein Dekodiertool, das durch ein Dekodierendgerät ausgewählt wird, verarbeitet werden kann;
- Mittel zur Einfügung, in das Signal, mindestens einer ersten Information zur Identifikation eines Typs I, P oder B der Bilder des Signals;
- Mittel zur Einfügung, in das Signal, mindestens einer zweiten Information zur Identifikation der Kontrollbilder, wobei die zweite Identifikationsinformation explizit anzeigt, dass ein Referenzbild vom Typ I, P oder B, das zur Vorhersage anderer Bilder dient, degradierbar ist oder nicht.

10. Von einem Kommunikationsnetz aus fernladbares und/oder auf einem computerlesbaren Träger aufgezeichnetes und/oder von einem Prozessor ausführbares Computerprogrammprodukt, **dadurch gekennzeichnet, dass** es Programmcodeanweisungen zur Durchführung des Kodierverfahrens nach Anspruch 8 aufweist.

11. Digitales Bildsignal, welches dazu bestimmt ist, in mindestens einem Dekodierendgerät dekodiert zu werden, welches eine Dekodierung mit variabler Komplexität durchführt, die für mindestens einen Schritt der Dekodierung eine Auswahl mindestens eines Dekodiertools aus mindestens zwei verfügbaren Dekodiertools ermöglicht,
**dadurch gekennzeichnet, dass** es aufweist: erste Bilder, Kontrollbilder genannt, und zweite Bilder, Zwischenbilder genannt, wobei jedes der Kontrollbilder in dem oder den Dekodierendgeräten für mindestens einen Schritt der Dekodierung durch mindestens ein vorbestimmtes Dekodiertool verarbeitet werden muss und mindestens eines der Zwischenbilder für mindestens einen Schritt der Dekodierung durch mindestens ein Dekodiertool, das durch ein Dekodierendgerät ausgewählt wird, verarbeitet werden kann,
und mindestens eine erste Information zur Identifikation eines Typs I, P oder B der Bilder des Signals und mindestens eine zweite Information zur Identifikation der Kontrollbilder, wobei die zweite Identifikationsinformation explizit anzeigt, dass ein Referenzbild vom Typ I, P oder B, das zur Vorhersage anderer Bilder dient, degradierbar ist oder nicht.

12. Signal nach Anspruch 11, **dadurch gekennzeichnet, dass** das Signal einerseits nicht degradierbare Informationen und andererseits degradierbare Informationen aufweist, die durch räumliche und/oder zeitliche Vorhersage ausgehend von mindestens einer degradierbaren oder nicht degradierbaren Information gewonnen wurden.

13. Datenträger, welcher mindestens ein digitales Bildsignal trägt, das dazu bestimmt ist, in mindestens einem Dekodierendgerät dekodiert zu werden, welches eine Dekodierung mit variabler Komplexität durchführt, die für mindestens einen Schritt der Dekodierung eine Auswahl mindestens eines Dekodiertools aus mindestens zwei verfügbaren Dekodiertools ermöglicht,
**dadurch gekennzeichnet, dass** das Signal aufweist: erste Bilder, Kontrollbilder genannt, und zweite Bilder, Zwischenbilder genannt, wobei jedes der Kontrollbilder in dem oder den Endgeräten für mindestens einen Schritt der Dekodierung durch mindestens ein vorbestimmtes Dekodiertool verarbeitet werden muss und mindestens eines der Zwischenbilder für mindestens einen Schritt der Dekodierung durch mindestens ein Dekodiertool, das durch ein Dekodierendgerät ausgewählt wird, verarbeitet werden kann,
und mindestens eine erste Information zur Identifikation eines Typs I, P oder B der Bilder des Signals und mindestens eine zweite Information zur Identifikation der Kontrollbilder, wobei die zweite Identifikationsinformation explizit anzeigt, dass ein Referenzbild vom Typ I, P oder B, das zur Vorhersage anderer Bilder dient, degradierbar ist oder nicht.

## Claims

1. Method for decoding a digital image signal in a decoding terminal, implementing variable-complexity decoding, enabling, for at least one step of the decoding, a selection of at least one decoding tool, among at least two available decoding tools,
comprising the following steps:
- reading, in said signal, of at least a first item of information of a type I, P or B of the images of said signal;
- reading, in said signal, of at least a second item of information for identification, among said images, of first images, known as control images, said second item of identification information explicitly signalling whether a reference image of I, P or B type used for the prediction of other images is degradable or not;
- from said second item of identification information, identification, among said images, of said control images corresponding to the non-degradable images, and second images, known as intermediate images corresponding to the degradable images;
- application, to each of said control images, for at least one step of the decoding, of at least one predetermined decoding tool, imposed by said signal;
- application, to at least one of said intermediate images, for at least one step of the decoding, of at least one decoding tool selected by said decoding terminal, and not imposed by said signal.

2. Decoding method according to Claim 1, **characterized in that** said signal comprises on the one hand non-degradable items of information and on the other hand degradable items of information, and **in that** said identification step considers that at least said non-degradable items of information are control images.

3. Decoding method according to any one of Claims 1 and 2, **characterized in that** said identification step comprises a step of reading, in said signal, of at least one item of processing information for at least one of said control images, specifying said predetermined decoding tool(s) to be applied to said control image.

4. Decoding method according to any one of Claims 1 to 3, **characterized in that** it selectively implements a plurality of decoding tool chains, comprising at least one of said tools,
and **in that** said application steps use, for one of said images, one of said decoding tool chains.

5. Decoding method according to any one of Claims 1 to 4, **characterized in that** said tools belong to the group comprising:
- spatial prediction tools taking account of all or part of the frequency coefficients of at least a part of at least one image;
- temporal prediction tools, using interpolation filters of various sizes;
- tools for taking account of motion, at the pixel or sub-pixel level;
- tools for filtering a blocking effect;
- motion compensation tools, using various models of motion;
- image synthesis tools;
- at least two tools ensuring one and the same decoding function and using different levels of binary representation.

6. Terminal for decoding a digital image signal, implementing variable-complexity decoding, enabling, for at least one step of the decoding, a selection of at least one decoding tool, among at least two available decoding tools,
comprising:
- means of reading, in said signal, of at least a first item of information for identification of a type I, P or B of the images of said signal;
- means of reading, in said signal, of at least a second item of information for identification, among said images, of first images, known as control images, said second item of identification information explicitly signalling whether a reference image of I, P or B type used for the prediction of other images is degradable or not;
- means of identification, identifying from said second item of identification information, among said images, said control images corresponding to the non-degradable images, and second images, known as intermediate images corresponding to the degradable images;
- means of application, to each of said control images, for at least one step of the decoding, of at least one predetermined decoding tool, imposed by said signal;
- means of application, to at least one of said intermediate images, for at least one step of the decoding, of at least one decoding tool selected by said decoding terminal, not imposed by said signal.

7. Computer program product downloadable from a communication network and/or stored on a medium readable by computer and/or executable by a processor, **characterized in that** it comprises program code instructions for the implementation of the decoding method according to at least one of Claims 1 to 5.

8. Method for encoding a digital image signal, intended to be decoded in at least one decoding terminal implementing variable-complexity decoding, enabling, for at least one step of the decoding, a selection of at least one decoding tool among at least two available decoding tools,
**characterized in that** it comprises the following steps:
- identification, among said images, of first images, known as control images, and of second images, known as intermediate images, each of said control images having to be processed, in said decoding terminal(s), for at least one step of the decoding, by at least one predetermined decoding tool, and at least one of said intermediate images being able to be processed, for at least one step of the decoding, by at least one decoding tool selected by a decoding terminal;
- insertion, into said signal, of at least a first item of information for identification of a type I,P or B of the images of said signal;
- insertion, into said signal, of at least a second item of information for identification of said control images, said second item of identification information explicitly signalling whether a reference image of I, P or B type used for the prediction of other images is degradable or not.

9. Device for encoding a digital image signal, intended to be decoded in at least one decoding terminal implementing variable-complexity decoding, enabling, for at least one step of the decoding, a selection of at least one decoding tool among at least two available decoding tools,
**characterized in that** it comprises:
- means of identification, among said images, of first images, known as control images, and of second images, known as intermediate images, each of said control images having to be processed, in said decoding terminal (s), for at least one step of the decoding, by at least one predetermined decoding tool, and at least one of said intermediate images being able to be processed, for at least one step of the decoding, by at least one decoding tool selected by a decoding terminal;
- means of insertion, into said signal, of at least a first item of information for identification of a type I,P or B of the images of said signal;
- means of insertion, into said signal, of at least a second item of information for identification of said control images, said second item of identification information explicitly signalling whether a reference image of I, P or B type used for the prediction of other images is degradable or not.

10. Computer program product downloadable from a communication network and/or stored on a medium readable by computer and/or executable by a processor, **characterized in that** it comprises program code instructions for the implementation of the encoding method according to Claim 8.

11. Digital image signal, intended to be decoded in at least one decoding terminal, implementing variable-complexity decoding, enabling, for at least one step of the decoding, a selection of at least one decoding tool, among at least two available decoding tools,
**characterized in that** it comprises first images, known as control images, and second images, known as intermediate images, each of said control images having to be processed, in said decoding terminal(s), for at least one step of the decoding, by at least one predetermined decoding tool, and at least one of said intermediate images being able to be processed, for at least one step of the decoding, by at least one decoding tool selected by a decoding terminal,
and at least a first item of information for identification of a type I, P or B of the images of said signal, and at least a second item of information for identification of said control images, said second item of identification information explicitly signalling whether a reference image of I, P or B type used for the prediction of other images is degradable or not.

12. Signal according to Claim 11, **characterized in that** said signal comprises on the one hand non-degradable items of information and on the other hand degradable items of information, obtained by spatial and/or temporal prediction from at least one degradable or non-degradable item of information.

13. Data medium carrying at least one digital image signal, intended to be decoded in at least one decoding terminal implementing variable-complexity decoding, enabling, for at least one step of the decoding, a selection of at least one decoding tool, among at least two available decoding tools,
**characterized in that** said signal comprises first images, known as control images, and second images, known as intermediate images, each of said control images having to be processed, in said terminal(s), for at least one step of the decoding, by at least one predetermined decoding tool, and at least one of said intermediate images being able to be processed, for at least one step of the decoding, by at least one decoding tool selected by a decoding terminal,
and at least a first item of information for identification of a type I, P or B of the images of said signal, and at least a second item of information for identification of said control images, said second item of identification information explicitly signalling whether a reference image of I, P or B type used for the prediction of other images is degradable or not.
